# EUROPEAN PATENT APPLICATION

(11) **EP 2 478 803 A1**
(43) Date of publication of application: **25.07.2012**
(21) Application number: 12152551.3
(22) Date of filing: 25.01.2012
(51) Int. Cl.: A47J 31/36

(54) **Machine for supplying hot and cold beverages**

(30) Priority: 25.01.2011 IT MI20110081
(71) Applicant: Imper S.p.A., 10122 Torino (IT)
(72) Inventor: Pagano, Gaetano, 50123 Firenze (IT)
(74) Representative: Jorio, Paolo

(57) **Abstract**

A machine (1) for supplying hot and cold beverages, in particular hot coffee and cold coffee, comprising: a water source (3); an infusion assembly (4) having an infusion chamber (5) which houses in use a capsule (6); circulation means (7, 8, 9) for the circulation of hot water under pressure to circulate a flow of hot water through the infusion chamber (5); a first dispenser (14) of hot beverages, arranged downstream of the infusion chamber (5) for supplying hot beverages produced in the infusion chamber (5); a refrigerator assembly (10); and an auxiliary circuit (11), in which circulates hot beverage drawn from an outlet (12) of the infusion chamber (5) and having a coil (31), arranged so as to be cooled by the refrigerator assembly (10), and a second dispenser (37) for cold beverages for supplying beverages cooled by the refrigerator assembly (10).

## Description

The present invention relates to a machine for supplying hot and cold beverages.

In particular, the invention relates to a machine that is adapt for supplying espresso coffee and other hot beverages prepared by infusion capsules, and also cold coffee and other cold beverages.

The espresso machines working with coffee capsules (usually also suitable for preparation, by way of capsules containing appropriate ingredients, of other hot beverages) are widely spread, especially for domestic use and/or offices, clubs, etc.; in general, a capsule coffee machine mainly comprises: a machine body, in which there is provided an infusion chamber housing a capsule in use; a closing device operating on the capsule to clamp the capsule within the infusion chamber and pierce the capsule; and hot water circulating means to circulate a pressurized hot water flow through the capsule in the infusion chamber for obtaining an infusion. Depending on the content of the capsule, the desired hot beverage (coffee, tea, etc.) is obtained.

The espresso coffee machines commonly available are not adapt for supplying, in addition to coffee and other hot beverages, cold beverages and specifically cold coffee.

Machines are known which allow the preparation of cold coffee, but in manners that appear in need of improvement, especially in terms of construction simplicity, effectiveness, rapidity of use and quality of the product supplied.

For example, the machine described in patent application US2010/0266740 is adapt for supplying cold coffee, but by relying on ice which is added to the hot coffee. This system of preparation, in addition to being relatively complicated and expensive, is not fully satisfactory in terms of quality of the cold coffee supplied, which results in having an altered taste by being diluted by the contact with the ice.

In general, the preparation of cold beverages through direct contact of the beverage with ice or other cooling substances alters the quality of the beverage; the problem is particularly evident with coffee, where the end cup quality is a fundamental requirement.

Other machines for supplying hot and/or cold beverages are not then completely satisfactory in terms of versatility (capacity of supplying various types of beverages), simplicity of construction, reliability and practicality of use.

It is an object of the present invention to provide a machine for supplying hot and cold beverages, in particular a capsule coffee machine for supplying hot and cold coffee, which is devoid of the drawbacks of the prior art highlighted herein.

In particular, it is an object of the invention to provide a machine for supplying hot and cold beverages which, being relatively simple, compact, reliable and versatile, allows to produce various types of beverages both hot and cold, and specifically high quality hot and cold coffee.

The present invention therefore relates to a machine for supplying hot and cold beverages, in particular to produce hot and cold espresso coffee, as defined in essential terms in the appended claim 1 and, in its additional features, in the dependent claims.

The machine of the invention allows to produce various types of beverages both hot and cold, and specifically high quality hot and cold coffee. In particular, the machine allows to prepare in a simple and fast way, an excellent cold coffee, without altering the characteristics of the espresso coffee obtained by traditional capsule infusion; more specifically, the machine allows to prepare a cold coffee that maintains the same taste and also the same appearance, including the typical "foam", of a hot espresso coffee; on the contrary, the known systems alter the taste and/or the appearance of the beverage, in particular by providing a black coffee without foam, as well as an altered flavor.

The machine of the invention is also simple, compact, reliable and versatile, lending itself to supply, as well as hot and cold coffee, also a variety of other hot and cold beverages.

Further characteristics and advantages of the present invention will be described by the following non-limiting embodiments, with reference to the appended drawings which show a schematic view of two embodiments of a machine for supplying hot and cold beverages, in particular hot coffee and cold coffee, in accordance with the invention.

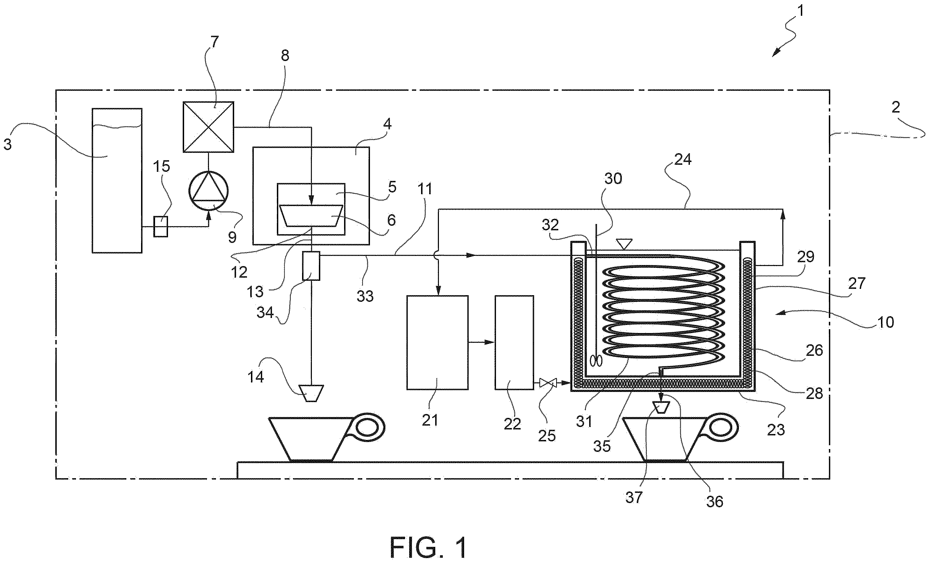

In the attached Figure 1 is indicated as a whole with 1 a machine for supplying hot and cold beverages.

The machine 1 comprises: a machine body 2; a water source 3, for example a tank or a joint for connection to an external water main; an infusion assembly 4, for example of capsule operated type, having an infusion chamber 5 housing in use a capsule 6; a boiler 7; a water circulation circuit 8, provided with a pressure pump 9 that connects the water source 3 to the boiler 7 and to the infusion chamber 5; a refrigerator assembly 10; an auxiliary circuit 11 that brings hot beverages from an outlet 12 of the infusion chamber 5 to the refrigerator assembly 10.

The machine body 2 is only schematically represented and houses and/or supports the other components of the machine 1.

The water source 3 is formed for example by a tank housed in the machine body 2, and/or a joint connectable to an external water main, and/or by a replaceable and/or rechargeable container.

The infusion assembly 4 is of a known type, for example of the capsule operated type and is not described in detail for simplicity. In general terms, the infusion assembly 4 comprises an infusion chamber 5, shaped to house a capsule 6, and defined for example by a pair of movable elements relative to one another, and a closing device (not shown) acting upon the capsule 6 to load the capsule 6 in the infusion chamber 5, to pierce the capsule 6 housed in the infusion chamber 5, and download the capsule 6 from the infusion chamber. The infusion chamber 5 has an outlet 12 connected, by way of an outlet conduit 13, to a first dispenser 14 for hot beverages, from which exits the beverage (e.g. coffee) produced in the infusion chamber 5.

The water circulation circuit 8 connects the water source 3 to the boiler 7 and to the infusion chamber 5, so as to bring, thanks to the pump 9, a pressurized hot water flow through the capsule 6 in the infusion chamber 5.

Optionally, the water circulation circuit 8 comprises a filter 15 arranged downstream of the water source 3 and upstream of the pump 9 and of the boiler 7.

The refrigerator assembly 10 may be of various types adapt for cooling a beverage circulating in the auxiliary circuit 11, without, however, bringing the beverage into contact with any cooling substance; in the not-limiting example shown (but not necessarily), the refrigerator assembly 10 comprises a compressor 21, a condenser 22, an evaporator 23, a cooling circuit 24 in which circulates a cooling fluid (for example, freon).

The cooling fluid circulates in the cooling circuit 24 from compressor 21, where it circulates in a gaseous state and is compressed and heated, to the condenser 22, where it cools and condenses in the liquid state; the cooling fluid then expands through an expansion valve 25, cooling and returning to the gaseous state, and reaches the evaporator 23 where it absorbs heat, to then return to the compressor 21 restarting the cycle.

The evaporator 23 comprises an ice-bank system 26, formed by a container 27 containing water or other suitable working liquid and delimited by walls 28 along or within which are arranged auxiliary conduits or coils 29 in which a cooling fluid circulates; preferably arranged inside the container 27 is a stirrer 30 that prevents the formation of ice.

It is understood that the refrigerator assembly 10 may be of a different type from that described herein purely by way of example, for example comprising Peltier cells.

The auxiliary circuit 11 comprises a coil 31, formed by a tube generally spirally wound, which is housed inside the container 27 and is substantially immersed in the working liquid (water); hot beverage circulates in the coil 31 drawn from the outlet 12 of the infusion chamber 5; the coil 31 has an inlet 32 which is connected, via an inlet branch 33 for the auxiliary circuit 11 to a diverter valve 34 arranged on the outlet conduit 13, and an outlet 35 which is connected, by way of an outlet branch 36 of the auxiliary circuit 11, to a second dispenser 37 for cold beverages.

The coil 31 is configured and dimensioned (in particular, having appropriate diameter and length) in order to ensure that the hot beverage is circulating in the coil 31 with a residence time and at an adequate speed for reaching the desired temperature.

Indicatively, the coil 31 has a length (development of the spirally wound tube forming the coil) between about 2.5 m and about 3.5 m and preferably around approximately 3 m, and inner diameter (inner diameter of passage of the beverage in the spirally wound tube) of between about 1.2 cm and about 1.9 cm, with these parameters, the supply of about 50÷60 cc of beverage is obtained in a time of about 30 seconds, ensuring the cooling of the beverage from about 80÷85° C (the typical temperature distribution of hot espresso) to about 3÷6° C.

In a typical example of the embodiment, the coil has 15 turns, each of which has a coil diameter of about 50 mm, a linear development of about 20 cm, and an inner diameter of about 1.8 cm.

In this way, the machine allows to prepare, in a very short time (about 30 seconds), a cold coffee which has the same appearance of the hot espresso coffee (in particular, with the same typical surface foam) and the same taste.

The diverter valve 34, for example an electrovalve, is arranged on the outlet conduit 13 downstream of the outlet 12 of the infusion chamber 5 and upstream of the first dispenser 14 for hot beverages; the diverter valve 34, controlled manually or by a specific control system or by electrical or electronic actuation device (not shown), is adapted to selectively direct the hot beverage flow exiting from the infusion chamber 5 towards the first dispenser 14 of hot beverages (if, in fact, the supply of a hot beverage is desidered) or towards the coil 31 of the auxiliary circuit 11, for supplying the suitably cooled beverage.

Preferably, the diverter valve 34 is a self-cleaning valve.

According to a preferred embodiment, the auxiliary circuit 11 and specifically the coil 31 are shaped and arranged in such a way that the hot beverage circulates in the auxiliary circuit 11 mainly by gravity (possibly assisted by the residual supply pressure at the outlet 12 of the infusion chamber 5).

In particular, the coil 31 in which circulates the hot beverage to be cooled is arranged below the outlet 12 of the infusion chamber 5; preferably, also, the outlet 35 of the coil 31 is arranged at a lower end of the coil 31, at the lowest point of the coil 31; in any case, the outlet 35 of the coil 31 is arranged lower than the inlet 32.

More generally, the auxiliary circuit 11 preferably comprises only sections and/or descending conduits; in particular, the second dispenser 37 for cold beverages is arranged lower (at a lower height) than the diverter valve 34 from which the hot beverage that circulates in the auxiliary circuit 11 is drawn.

In this way, at the end of each supplying cycle the coil 31 and the auxiliary circuit 11 as a whole are substantially empty and therefore avoiding entrapment of liquid with relative hygiene or contamination risks.

However a washing mode can also be provided (manual or automatic), in which water or steam, drawn for example from the outlet 12 of the infusion chamber 5 through the diverter valve 34, are circulated in the auxiliary circuit 11.

The machine also optionally comprises a dispenser (not shown) of sugar or other substances; advantageously, the dispenser is arranged upstream of the refrigerator assembly 10, and precisely of the diverter valve 34, for example on the outlet conduit 13. The dispenser comprises a tank of sugar or other sweetening substance, and/or sweet liquid such as sugar syrup, etcetera.

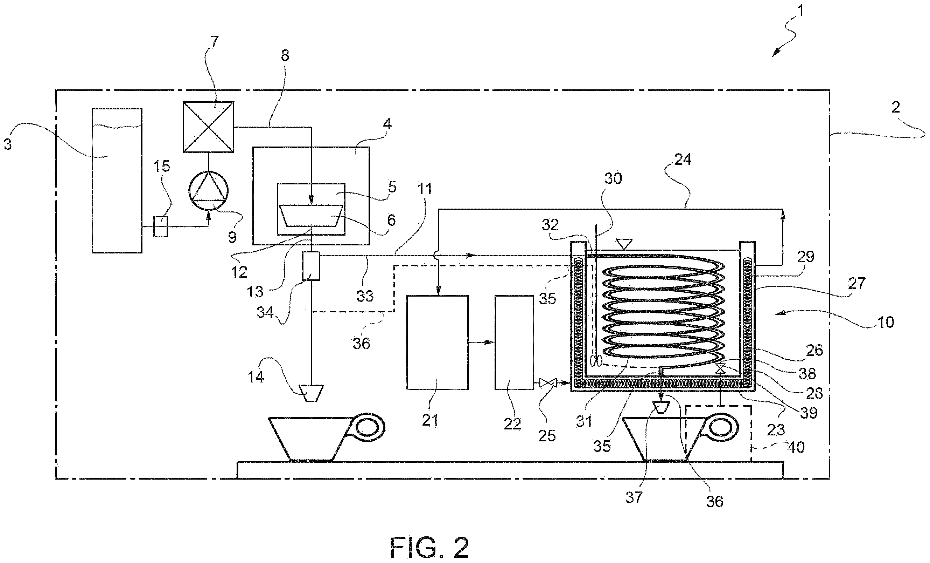

According to the variant of figure 2, in which any similar or identical details to those already described are indicated using the same numbers, the coil 31 has a bottom drain 38, preferably arranged in the lower section of the coil 31 and provided with a discharge valve 39; in this case, the supply of a cold beverage can take place, instead essentially by gravity as described above, by effect of the pressure present at the outlet from the infusion chamber 5; the opening of the drain valve 39 allows the emptying of the coil 31 and the auxiliary circuit 11; advantageously, the drain valve 39 is an electrovalve that opens automatically after the supply of cold beverage at each supply cycle, to drain into an appropriate compartment 40 (for example, the same compartment destined for the collection of used capsules) the residual beverage remained in the coil 31.

In this variant, the outlet 35 of the coil 31 may also not be arranged at the bottom end of the coil 31, but in a higher position, as the emptying of the coil 31 (and of the auxiliary circuit 11) is ensured by the bottom drain. In this case, as shown in broken lines in Figure 2, the machine 1 can have only one common dispenser 14 both for hot beverages and for cold beverages: the outlet 35 of the coil 31 (for example placed at substantially the same height of the inlet 32) is connected via the outlet branch 36 to the dispenser 14, which constitutes a common dispenser for all hot and cold beverages.

Finally, it is obvious that to the machine described and illustrated herein may be made further modifications and variants which do not depart from the scope of the appended claims.

## Claims

1. A machine (1) for supplying hot and cold beverages, in particular hot coffee and cold coffee, comprising: a water source (3), for example a tank or a joint for connection to an external water main; an infusion assembly (4) having an infusion chamber (5) that houses, in use, a capsule (6); pressurized hot water circulation means (7, 8, 9) for circulating a pressurized hot water flow through the infusion chamber (5); a first dispenser (14), set downstream of the infusion chamber (5) for supplying hot beverages produced in the infusion chamber (5); the machine (1) being **characterized by** comprising: a refrigerator assembly (10); and an auxiliary circuit (11), in which a hot beverage, drawn from an outlet (12) of the infusion chamber (5), circulates and having a coil (31), arranged so as to be cooled by the refrigerator assembly (10) and connected to the first dispenser (14) and/or to a second dispenser (37) for supplying cold beverages cooled by the refrigerator assembly (10).

2. A machine according to claim 1, comprising a diverting valve (34), arranged on an outlet conduit (13) that exits from the infusion chamber (5), the diverting valve (34) being apt to selectively direct the hot beverage flow coming out from the infusion chamber (5) towards the first dispenser (14) or towards the auxiliary circuit (11).

3. A machine according to claim 2, wherein the diverting valve (34) is an electrovalve or a hand-operated valve of a self-cleaning type.

4. A machine according to one of the preceding claims, wherein the auxiliary circuit (11) is configured in such a way the hot beverage to be cooled, circulating in the auxiliary circuit (11), never contacts cooling fluids.

5. A machine according to one of the preceding claims, wherein the refrigerator assembly (10) comprises a compressor (21), a condenser (22), an evaporator (23), a cooling circuit (24) in which a cooling fluid circulates, and an ice-bank system (26), formed by a container (27) containing water or another suitable working liquid and delimited by walls (28), provided with auxiliary conduits or coils in which a cooling fluid circulates.

6. A machine according to claim 5, wherein the coil (31) is housed inside the container (27) and is substantially immersed in the working liquid.

7. A machine according to one of the preceding claims, wherein the auxiliary circuit (11) and specifically the coil (31) are shaped and arranged in such a way the hot beverage circulates in the auxiliary circuit (11) essentially by gravity.

8. A machine according to one of the preceding claims, wherein the coil (31) has an inlet (32) that is connected, via an inlet branch (33) of the auxiliary circuit (11) provided with a diverting valve (34), to the outlet (12) of the infusion chamber (5); and an outlet (35) that is connected, via an outlet branch (36) of the auxiliary circuit (11), to the first dispenser (14) or to the second dispenser (37).

9. A machine according to claim 8, wherein the outlet (35) of the coil (31) is arranged lower than the inlet (32).

10. A machine according to claim 8 or 9, wherein the outlet (35) of the coil (31) is arranged at a bottom end of the coil (31), at the lowest point of the coil (31).

11. A machine according to one of the preceding claims, wherein the coil (31) in which the hot beverage to be cooled circulates is arranged below the outlet (12) of the infusion chamber (5).

12. A machine according to one of the preceding claims, wherein the coil (31) has a bottom drain provided with a drain valve.

13. A machine according to claim 12, wherein the supply of cold beverages occurs by effect of the pressure at the outlet of the infusion chamber (5) and the machine (1) has a common dispenser (14) for both the hot beverages and the cold beverages.

14. A machine according to claim 12 ○ 13, wherein the drain valve is an electrovalve that opens automatically after the supply of the hot beverage at each supply cycle, for discharging in an appropriate compartment the residual beverage remained in the coil (31).

15. A machine according to one of the preceding claims, comprising a first dispenser (14) of hot beverages, arranged downstream of the infusion chamber (5) for supplying hot beverages produced in the infusion chamber (5); and a second dispenser (37) of cold beverages, connected to an outlet (12) of the coil (31) for supplying beverages cooled by the refrigerator assembly (10).
